# EUROPÄISCHE PATENTSCHRIFT

(11) **EP 2 654 993 B1**
(45) Veröffentlichungstag und Bekanntmachung des Hinweises auf die Patenterteilung: **20.02.2019**
(21) Anmeldenummer: 11799684.3
(22) Anmeldetag: 16.12.2011
(51) Int. Cl.: B23B 27/22, B23B 27/14, B23C 5/20

(54) **SCHNEIDEINSATZ MIT STRUKTURIERTEN FREIFLÄCHEN**
CUTTING INSERT WITH STRUCTURED SIDE SURFACES
PLAQUETTE DE COUPE AVEC SURFACES LATERALES STRUCTURÉES

(30) Priorität: 20.12.2010 DE 102010063611
(43) Veröffentlichungstag der Anmeldung: 30.10.2013
(73) Patentinhaber: Walter AG, 72072 Tübingen (DE)
(72) Erfinder: LENISCHENKO, Stefan, 72355 Schömberg (DE)
(74) Vertreter: WSL Patentanwälte Partnerschaft mbB
(86) Internationale Anmeldenummer: PCT/EP2011/073074
(87) Internationale Veröffentlichungsnummer: WO 2012/084718

(56) Entgegenhaltungen:
- WO-A1-2005/065874
- WO-A1-2010/101514
- DE-A1- 19 600 172
- US-A1- 2010 124 465

## Beschreibung

Die vorliegende Erfindung betrifft einen Schneideinsatz nach dem Oberbegriff des unabhängigen Anspruchs 1, Der Schneideinsatz hat mindestens eine strukturierten Freifläche, wobei der Schneideinsatz eine obere und eine untere Fläche sowie eine oder mehrere Randflächen aufweist, welche die obere und die untere Fläche miteinander verbinden, wobei am Übergang mindestens einer Randfläche mindestens zu der oberen Fläche mindestens eine Schneidkante ausgebildet ist, wobei die an die Schneidkante angrenzende obere Fläche als Spanfläche ausgebildet ist und die an die selbe Schneidkante angrenzende Randfläche als Freifläche ausgebildet ist. Im Abstand von der Schneidkante ist in der Freifläche mindestens eine Aussparung vorgesehen.

Aus der WO 2005/065874 A1 ist ein Schneideinsatz mit gekrümmten Schneidkanten und entsprechend gewölbten Freiflächen bekannt, die jeweils Aussparungen aufweisen; deren Grund eine Ebene Anlagefläche zur Positionierung des Schneideinsatzes in einem Plattensitz bereitstellt. Die Form und Größe der Aussparung hängt dabei allein von der durch die Aussparung zu beseitigenden Krümmung der Freifläche ab. Eine ähnliche Funktion haben Aussparungen in Freiflächen von Schneideinsätzen gemäß WO 2010/101514 A1 und US 2010/0124465 A1.

Die DE 196 00 172 A1 zeigt sich über die gesamte Länge einer Freifläche erstreckende Nuten, die der Hindurchleitung eines Kühlmittels diesen.

Aus der DE 43 36 055 A1 ist ein Schneideinsatz mit Aussparungen in den Freiflächen bekannt, bei welchen es vor allem darum geht, eine verbesserte Schneidwirkung zu erzielen, indem die Freifläche entlang der Schneidkante wechselnde Freiwinkel aufweist. Zu diesem Zweck sind wahlweise von der Freifläche hervorstehende Erhebungen oder Aussparungen vorgesehen, die auf der Freifläche bis relativ nah an die Schneidkante heranreichen, um den Effekt wechselnder Freiwinkel wirksam werden zu lassen. Konkret reichen entsprechende Ausnehmungen bis auf 0,2 mm an die Schneidkante heran, wobei Erhebungen vorzugsweise sogar bis zu 0,1 mm an die Schneidkante heranragen. Die Aussparungen und/oder Erhebungen sind in Richtung parallel zur Schneidkante relativ kurz ausgestaltet, so dass eine Mehrzahl von Aussparungen und/oder Erhebungen mit dazwischenliegenden, ebenen Bereichen der Freifläche abwechseln, so dass entlang der Schneidkante entsprechend häufig ein Wechsel des jeweiligen Freiwinkels vorliegt. Abgesehen von einigen kugelschalenförmigen Eindrückungen in einer Ausführungsform zeigen ansonsten alle Ausführungsformen der Schneideinsätze in der vorgenannten Druckschrift Aussparungen und/oder Erhebungen, die sich mit ihren größten Abmessungen senkrecht zur Schneidkante erstrecken.

Dabei soll das Schnittverhalten des Schneideinsatzes durch eine bessere Führung und weitere Minderung der Vibration beruhigt werden, wobei insbesondere eine Reduzierung des Freiflächenverschleißes, eine Reduzierung der Ratterneigung und eine Reduzierung der schnittnormalen Kräfte erreicht werden soll. Hierzu sind die Ausnehmungen bzw. Erhebungen in der Weise vorgesehen, dass lokal ständig wechselnde Freiwinkel entstehen.

Das vorstehend genannte Dokument befasst sich demnach mit der konkreten Spanbildung und dem Kontakt der Freifläche mit dem Werkstück unmittelbar hinter der Schneidkante wobei die konkrete Spanbildung auch sehr stark von dem bearbeiteten Material und der Schnitttiefe abhängt. Es betrachtet jedoch nicht den Einfluss der Freiflächen auf bereits erzeugte Späne.

Bei manchen Anwendungen bilden sich vor allem aufgrund der Eigenschaften des Werkstückmaterials relativ lange Wendelspäne. Derartige Wendelspäne haben, wenn sie auf Bereiche der Freifläche auftreffen, die neben der Werkstückoberfläche freiliegen, (wenn beispielsweise nur ein Teil der Schneidkante mit dem Werkstück in Eingriff steht), die Tendenz an der Freifläche abzugleiten wobei sie leicht in den schmalen Spalt zwischen Wendeplatte und Plattensitz oder auch zwischen die aktive Freifläche und die Werkstückoberfläche geraten können. Dies kann z. B. bei doppelseitigen Wendeschneidplatten zu einem Abreißen der unteren Schneidkante führen. (Als "aktive Freifläche" wird hier der Freiflächenabschnitt bezeichnet, der an den mit dem Werkstück in Eingriff kommenden Schneidkantenabschnitt angrenzt).

Der vorliegenden Erfindung liegt daher die Aufgabe zugrunde, einen Schneideinsatz zu schaffen, bei welchem die Gefahr von Beschädigungen des Schneideinsatzes und/oder des Werkzeuges und/oder des Werkstücks durch Wendelspäne herabgesetzt ist.

Diese Aufgabe wird durch einen Schneideinsatz mit den Merkmalen des unabhängigen Anspruchs 1 gelöst.

Im Abstand zu der Schneidkante ist in der Freifläche mindestens eine Aussparung vorgesehen, deren aufsummierte Länge parallel zur Schneidkante gemessen in einer Ausführungsform mindestens 60% und vorzugsweise mindestens 80% der Länge der zugeordneten Schneidkante beträgt.

Im Unterschied zu bekannten Schneideinsätzen mit strukturierten Schneidflächen, bei denen es auf einen variierenden Freiwinkel ankommt und die parallel zur Schneidkante gemessene Erstreckung der Aussparungen oder Erhebungen nur eine untergeordnete Rolle spielt, kommt es bei der vorliegenden Erfindung darauf an, dass ein auf die offen liegende Freifläche auftreffender Span sich möglichst in der Aussparung verhakt, die Aussparung darf deshalb nicht zu klein sein und muss auch ausreichend tief sein, wobei die ebenen Bereiche der Freifläche weitgehend auf den an die Schneidkante unmittelbar anschließenden Abschnitt beschränkt sind.

Die Aussparung ist als eine sich parallel zur Schneidkante erstreckende Nut ausgebildet, die vor dem Eckübergang zu einer benachbarten Freifläche endet. Dabei sollte der Abstand der Aussparung bzw. Nut zu der Schneidkante mindestens ein Zehntel des minimalen Abstandes zwischen der oberen und unteren Fläche des Schneideinsatzes betragen, wobei man diesen Abstand auch kurz als die "Dicke" des Schneideinsatzes definieren kann. Der Abstand der Aussparung zur Schneidkante soll allerdings auch nicht größer als ein Viertel der Dicke des Schneideinsatzes sein. In absoluten Zahlen liegt der Abstand der Aussparungen von der Schneidkante im Bereich von mindestens 0,3 bis maximal 3 mm.

Die erfindungsgemäßen Aussparungen springen relativ abrupt von der Freifläche zurück, d. h. der Winkel zwischen der Innenfläche einer Aussparung und der unmittelbar angrenzenden Freifläche liegt oberhalb von 60°, d. h. in der Größenordnung von 60° bis 90°. Die Tiefe der Aussparungen, gemessene von den angrenzenden, ebenen Abschnitten der Freifläche, beträgt minimal 1 mm, vorzugsweise mindestens 1,5 mm.

Da die an die Schneidkante angrenzende Freifläche von der Aussparung weit genug beabstandet ist, hat die Aussparung auch keinen unmittelbaren Einfluss auf die Spanbildung. Der Effekt einer solchen Aussparung besteht vielmehr darin, dass Späne, welche auf die Freifläche auftreffen, im Gegensatz zu glatten Freiflächen oder solchen mit weniger abrupten und weniger tiefen Aussparungen nicht an der Freifläche abgleiten und dabei womöglich in den Spalt zwischen Freifläche und Werkstück hineingeraten, sondern sich vielmehr in einer solchen Aussparung "verhaken", was sehr schnell zum Bruch eines solchen Spans führt, der dann leichter abtransportiert werden kann und die Gefahr von Beschädigungen reduziert.

Zweckmäßigerweise ist der Schneideinsatz als doppelseitige Wendeplatte ausgebildet, bei welcher die obere und die untere Fläche im Wesentlichen gleich ausgebildet sind und je nach Orientierung ihre Funktion als Spanfläche oder als auf einem Werkzeugsitz aufliegende Fläche wechselseitig austauschen.

Gemäß einer Variante der vorliegenden Erfindung sind zwei parallele Nuten vorgesehen, die wechselweise jeweils den gleichen Abstand zu der oberen bzw. der unteren Fläche haben.

Der Abstand der Aussparungen bzw. Nuten zu der Schneidkante ist tendenziell etwas größer als bei den aus den Stand der Technik bekannten Aussparungen und beträgt, wie bereits erwähnt, minimal ein Zehntel der Dicke des Schneideinsatzes, vorzugsweise mindestens 0,3 mm oder sogar mehr als 1 mm, z. B. 1,1 mm. Bei doppelseitigen Schneideinsätzen sind zweckmäßigerweise auch die Freiflächen entsprechend symmetrisch ausgebildet und weisen demzufolge entweder mehrere Aussparungen auf, von denen eine der Schneidkante an der oberen Fläche und die andere der Schneidkante an der unteren Fläche zugeordnet ist, oder aber eine zwischen oberer und unterer Schneidkante nicht unterbrochene Aussparung ist symmetrisch bezüglich der oberen und der unteren Schneidkante ausgebildet. Die symmetrische Anordnung und Ausbildung entsprechender Aussparungen stellt sicher, dass die Funktion des Schneideinsatzes auch hinsichtlich des Brechens und Zerstörens von Spänen unabhängig von der Orientierung ist, mit welcher der Schneideinsatz in seinem Sitz am Werkzeug befestigt ist. Abgesehen von den Aussparungen sollten die Randflächen des Schneideinsatzes gemäß der vorliegenden Erfindung im Wesentlichen eben sein, d. h. insbesondere bleibt der Freiwinkel über die Länge der Schneidkante hinweg im Wesentlichen konstant, es sei denn, die Freifläche wäre zusätzlich zu dem Vorsehen einer oder mehrerer Aussparungen asymmetrisch verkippt, so dass der Freiwinkel sich entlang der Schneidkante kontinuierlich ändert.

Die Erfindung ist insbesondere auch anwendbar auf indexierbare, z. B. polygonale Schneideinsätze mit mindestens drei und vorzugsweise mindestens vier im Wesentlichen ebenen Randflächen, welche die erfindungsgemäßen Aussparungen aufweisen.

Allerdings können derartige Nuten auch unterbrochen sein und beispielsweise aus zwei nutförmigen Abschnitten bestehen, die sich zum einen nicht über eine Ecke zu einer benachbarten Randfläche hinaus erstrecken und zum anderen auch etwa in der Mitte unterhalb einer Schneidkante durch einen Steg unterbrochen sind, dessen Oberfläche in der Ebene der übrigen Freifläche liegt.

Es versteht sich, dass der Abstand zu der Schneidkante jeweils genügend groß sein muss, um die Festigkeit und Stabilität der Schneidkante nicht zu beeinträchtigen. Dies ist insbesondere dann erforderlich, wenn die zu der Schneidkante hin liegende Wand der Aussparung relativ abrupt zurückspringt, d. h. sich unter einem relativ großen Winkel von z. B. 60° oder mehr relativ zu der Ebene der Freifläche erstreckt.

Bei einem indexierbaren Schneideinsatz, der mehrere Randflächen aufweist, welche mit entsprechenden Nuten oder sonstigen Aussparungen ausgebildet sind, wird der Effekt des Brechens von Wendelspänen insbesondere auch dann erzielt, wenn die Späne auf eine Freifläche auftreffen, die zu der aktiven Freifläche, d. h. der Freifläche, die an die aktuell aktive Schneidkante anschließt, benachbart oder beabstandet ist.

Weitere Vorteile, Merkmale und Anwendungsmöglichkeiten der vorliegenden Erfindung werden deutlich anhand der folgenden Beschreibung einer bevorzugten Ausführungsform und der dazugehörigen Figuren. Es zeigen:
Figur 1 eine perspektivische Ansicht eines erfindungsgemäßen Schneideinsatz gemäß einer ersten Ausführungsform,
Figur 2 eine Seitenansicht eines entsprechenden Schneideinsatzes und
Figuren 3 bis 8 verschiedene Varianten von Aussparungen in den Randflächen von Schneideinsätzen, wobei die Varianten gemäß Figuren 3, 4 und 7 nicht zur Erfindung gehören.

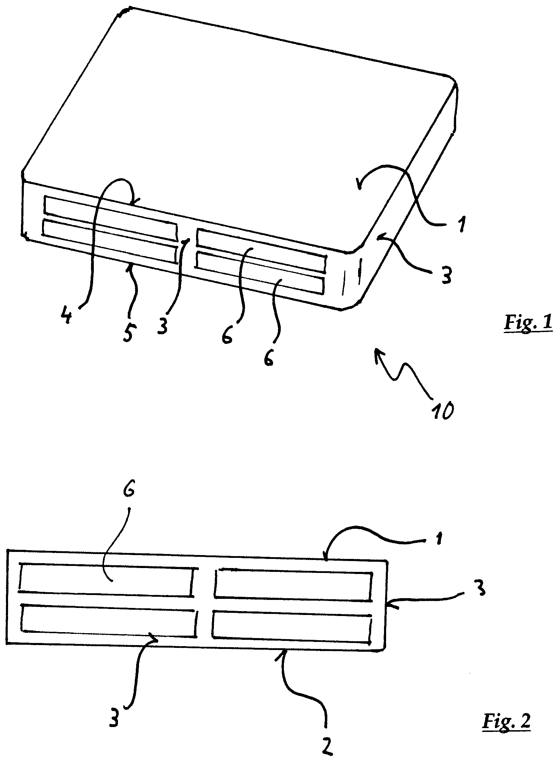

Man erkennt in Figur 1 einen in der Draufsicht im Wesentlichen quadratischen Schneideinsatz 10 in einer perspektivischen Ansicht mit einer oberen Fläche 1, einer (in Figur 1 nicht sichtbaren) unteren Fläche 2 und im Wesentlichen ebenen Randflächen 3. Am Übergang zwischen mindestens einer der Randflächen 3 und der Oberseite 1 bzw. der Unterseite 2 ist jeweils eine Schneidkante 4 bzw. 5 ausgebildet. Die an diese Schneidkanten 4, 5 angrenzende bzw. sich zwischen diesen Schneidkanten 4, 5 erstreckende Freifläche 3 weist vier nutförmige, symmetrisch angeordnete Aussparungen auf, die durch einen schmalen Steg voneinander getrennt sind. Der lichte Abstand d der Aussparung von einer zugeordneten Schneidkante 4 bzw. 5 beträgt höchstens ein Drittel der Dicke D des Schneideinsatzes, welche im Wesentlichen durch den Abstand zwischen den Schneidkanten 4, 5 bzw. dem Abstand der Oberseite 1 von der Unterseite 2 definiert ist. Wenn die Oberseite 1 und die Unterseite 2 strukturiert sein sollte, d. h. Erhebungen und/oder Vertiefungen aufweisen sollte, so kann man als Maßstab für die Dicke D auch den Abstand zwischen den einander am nächsten kommenden Flächenbereichen der oberen Fläche 1 und der unteren Fläche 2 verwenden.

Der Abstand der nutförmigen Aussparungen 6 zu den Schneidkanten 4, 5 sollte aber jeweils auch nicht größer sein als ein Viertel dieser Dicke D.

Schneidkanten können auch am Übergang der übrigen Randflächen 3 zu der oberen Seite 1 und der unteren Seite 2 ausgebildet sein und in diesem Fall sollten auch die übrigen Randflächen selbstverständlich entsprechende Aussparungen 6 aufweisen, die aber in Figur 1 nicht dargestellt sind.

In der Seitenansicht gemäß Figur 2 erkennt man nochmals die Freifläche 3 mit vier asymmetrisch angeordneten, nutartigen Aussparungen 6.

Es versteht sich, dass die nutartigen Aussparungen 6 nicht durch einen mittigen Steg getrennt sein müssten, sondern dass jeweils eine Aussparung 6 sich in Form einer durchgehenden Nut parallel zu der Schneidkante 4 bzw. der Schneidkante 5 erstrecken könnte. Ebenso gut kann an Stelle zweier Aussparungen übereinander, d. h. einer der Schneidkante 4 und einer der Schneidkante 5 zugeordneten Aussparung, auch eine einzige, zusammenhängende Aussparung bzw. Nut 6 vorgesehen sein, die vorzugsweise bezüglich der oberen und unteren Schneidkante symmetrisch ausgebildet ist.

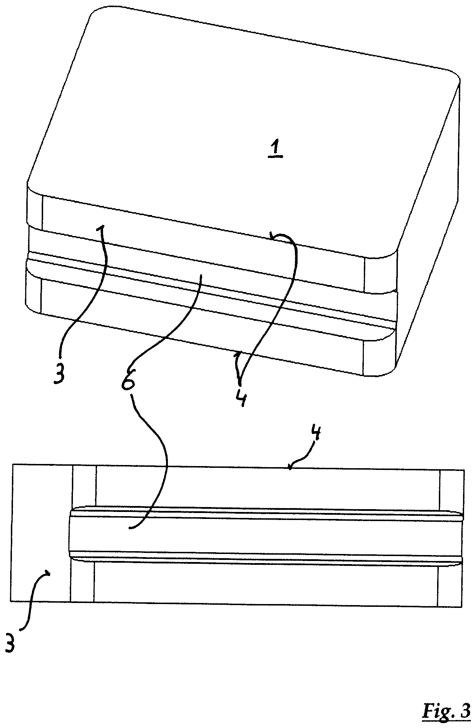

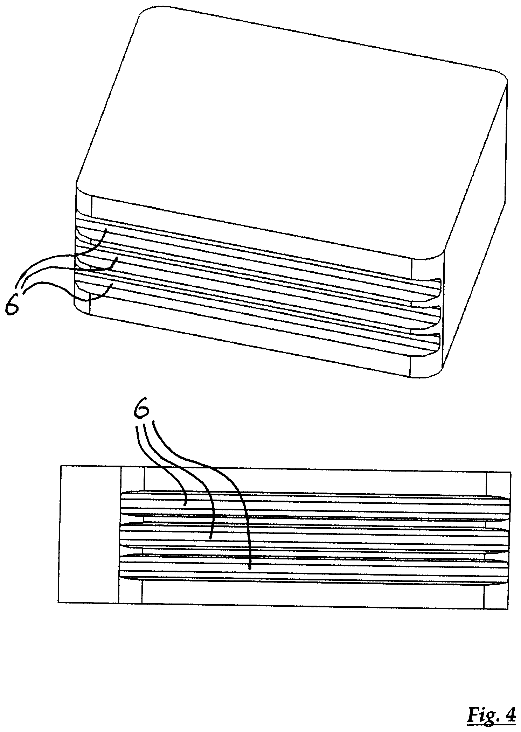

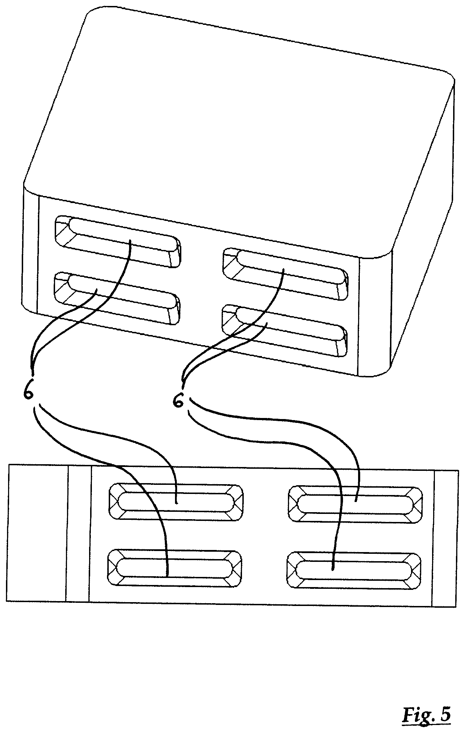

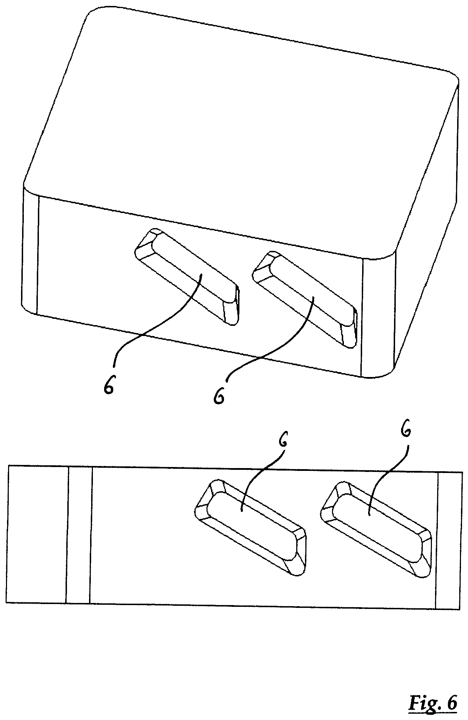

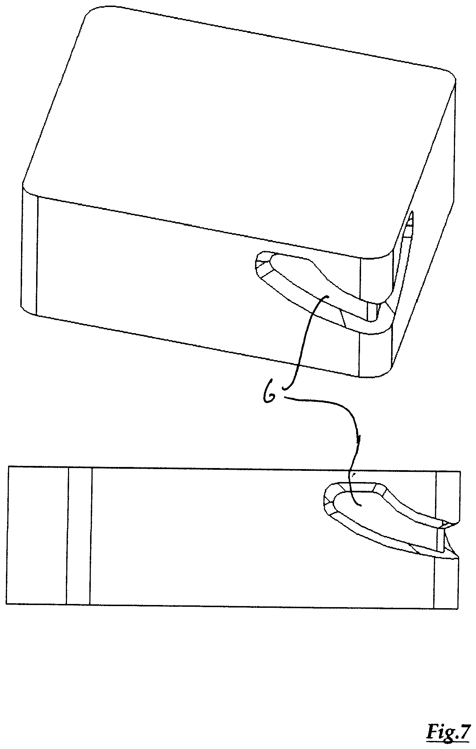

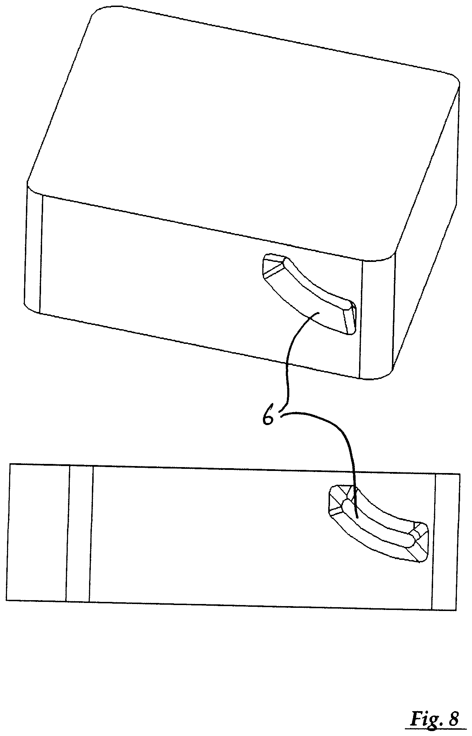

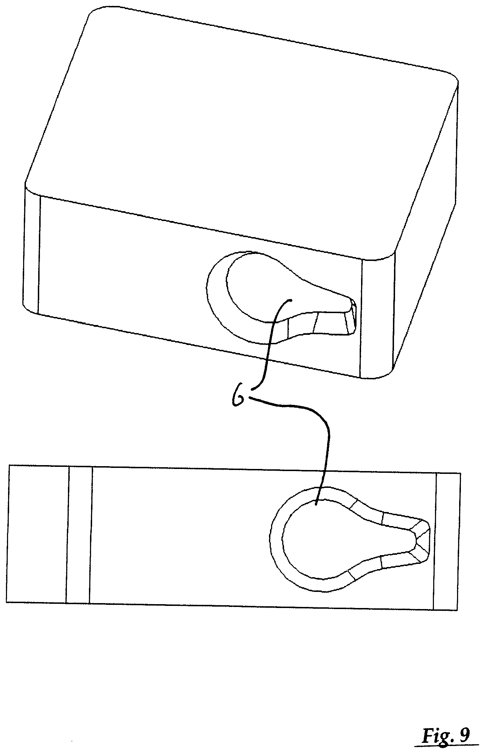

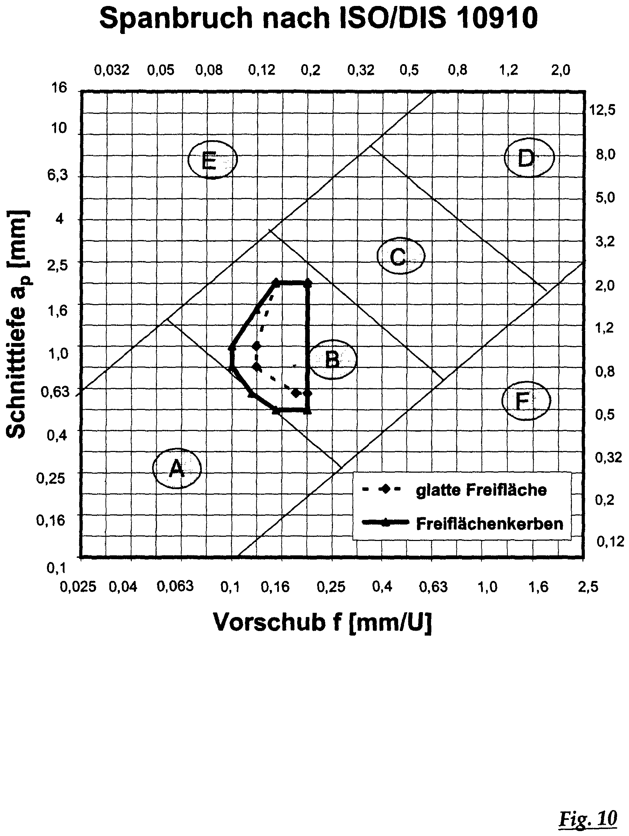

Unterschiedliche Ausgestaltungen und Anordnungen von Aussparungen 6 sind in den Figuren 3 bis 8 zu erkennen, wobei die Ausgestaltungen gemäß Figuren 3, 4 und 7 nicht zur Erfindung gehören. Die Aussparungen können, müssen jedoch nicht notwendigerweise symmetrisch bzgl. der Schneidkante bzw. Schneidkantenmitte angeordnet sein. Je nach Anwendungsbereich könnten die Aussparungen auch asymmetrisch zu einer Ecke hin verschoben sein. Es versteht sich, dass die erfindungsgemäßen Wendeschneidplatten auch eine zentrale Befestigungsbohrung aufweisen können, wie dies in allen Ausführungsbeispielen dargestellt ist.

Als obere Fläche 1 und untere Fläche 2 werden die jeweils größten Flächen der Schneideinsätze bezeichnet, wobei für den Vergleich das Bruttomaß der Fläche herangezogen wird, d. h. ohne die z. B. von einer Befestigungsbohrung in Anspruch genommene Fläche. Die Randflächen 3 sind demzufolge die kleineren Flächen, welche die obere und die untere Fläche 1, 2 miteinander verbinden.

## Patentansprüche

1. Schneideinsatz mit einer oberen und einer unteren Fläche (1, 2), sowie mit einer oder mehreren Randflächen (3), welche die obere (1) und untere Fläche (2) miteinander verbinden, wobei am Übergang mindestens einer Randfläche (3) mindestes zu der oberen Fläche (1) mindestens eine Schneidkante (4) ausgebildet ist, wobei die an die Schneidkante angrenzende obere Fläche als Spanfläche ausgebildet ist und die an die Schneidkante angrenzende Randfläche als Freifläche (3) ausgebildet ist, wobei im Abstand zu der Schneidkante (4) in der Freifläche (3) mindestens eine Aussparung (6) vorgesehen ist, **dadurch gekennzeichnet, dass** die Freiflächen, abgesehen von der mindestens einen Aussparung, im Wesentlichen eben sind, dass die mindestens eine Aussparung als sich parallel zu der Schneidkante (4) erstreckende Nut (6) ausgebildet ist, welche vor dem Eckübergang zu einer benachbarten Freifläche endet, dass die Seitenwände der Aussparung (6) um einen Winkel von mehr als 60° gegenüber der Ebene der Freifläche abgewinkelt sind und dass die Aussparung gegenüber der Ebene der angrenzenden Freifläche eine Tiefe von mindestens 1 mm hat..

2. Schneideinsatz nach Anspruch 1, **dadurch gekennzeichnet, dass** die Aussparung (6) parallel zu der Schneidkante (3) gemessen sich über eine Länge erstreckt, die mindestens 60% und vorzugsweise mindestens 80% der Länge der zugeordneten Schneidkante entspricht.

3. Schneideinsatz nach einem der Ansprüche 1 oder 2, **dadurch gekennzeichnet, dass** die Aussparung einen Abstand zu der Schneidkante (4) hat, der mindestens einem Zehntel des minimalen Abstandes zwischen der oberen und unteren Fläche des Schneideinsatzes entspricht.

4. Schneideinsatz nach einem der Ansprüche 1 bis 3, **dadurch gekennzeichnet, dass** die Aussparung zu der Schneidkante (4) einen minimalen Abstand hat, der höchstens einem Viertel des maximalen Abstandes zwischen der oberen und unteren Fläche (1, 2) entspricht.

5. Schneideinsatz nach einem der Ansprüche 1 bis 4, **dadurch gekennzeichnet, dass** er als doppelseitige Wendeplatte ausgebildet ist, bei welcher die obere (1) und die untere Fläche (2) gleich ausgebildet sind und je nach Orientierung als Spanfläche oder Stützfläche dient.

6. Schneideinsatz nach Anspruch 5, **dadurch gekennzeichnet, dass** die Aussparung (6) bzgl. der benachbarten oberen und unteren Schneidkanten (4, 5) symmetrisch ausgebildet ist.

7. Schneideinsatz nach einem der vorstehenden Ansprüche, **dadurch gekennzeichnet, dass** die Aussparungen gegenüber der Ebene der angrenzenden Freifläche eine Tiefe von mindestens 1,5 mm, haben

8. Schneideinsatz nach einem der vorstehenden Ansprüche, **dadurch gekennzeichnet, dass** mehrere, voneinander getrennte Aussparung auf einer Freifläche vorgesehen sind.

9. Schneideinsatz nach einem der Ansprüche 1 bis 8, **dadurch gekennzeichnet, dass** der Schneideinsatz als indexierbarer Schneideinsatz mindestens drei, vorzugsweise mindestens vier im Wesentlichen ebene und zueinander abgewinkelte Randflächen aufweist, von denen mindestens zwei die Aussparung(en) (6) aufweisen.

10. Schneideinsatz nach einem der vorstehenden Ansprüche, **dadurch gekennzeichnet, dass** die eine oder die mehreren Aussparungen sich über die gesamte, parallel zu einer Schneidkante gemessene Länge einer Freifläche erstrecken.

## Claims

1. A cutting insert comprising an upper and a lower surface (1, 2) and one or more edge surfaces (3) which connect the upper surface (1) and the lower surface (2) together, wherein provided at a transition of at least one edge surface (3) at least to the upper surface (1) is at least one cutting edge (4), wherein the upper surface adjoining the cutting edge is in the form of a chip surface and the edge surface adjoining the cutting edge is in the form of a tool flank (3), wherein at least one recess (6) is provided in the tool flank (3) at a spacing from the cutting edge (4), **characterized in that** apart from the at least one recess the tool flanks are substantially flat, that the at least one recess is in the form of a groove (6) extending parallel to the cutting edge (4), wherein the at least one recess ends before the corner transition to an adjacent tool flank, that the side walls of the recess (6) are angled by an angle of more than 60° relative to the plane of the tool flank and that the recess is of a depth of at least 1 mm with respect to the plane of the adjoining tool flank.

2. A cutting insert according to claim 1 **characterized in that** the recess (6), measured parallel to the cutting edge (3), extends over a length which corresponds to at least 60% and preferably at least 80% of the length of the associated cutting edge.

3. A cutting edge according to one of claims 1 or 2 **characterized in that** the recess is at a spacing from the cutting edge (4) that corresponds at least to a tenth of the minimum spacing between the upper and lower surfaces of the cutting insert.

4. A cutting insert according to one of claims 1 to 3 **characterized in that** the recess has a minimum spacing relative to the cutting edge (4) that corresponds at most to a quarter of the maximum spacing between the upper and lower surfaces (1, 2).

5. A cutting insert according to one of claims 1 to 4 **characterized in that** the cutting insert is in the form of a double-sided reversible bit in which the upper surface (1) and the lower surface (2) are of the same configuration and serve as a chip surface or a support surface depending on the respective orientation.

6. A cutting insert according to claim 5 **characterized in that** the recess (6) is symmetrical with respect to the adjacent upper and lower cutting edges (4, 5).

7. A cutting insert according to one of the preceding claims **characterized in that** the recesses are of a depth of at least 1.5 mm with respect to the plane of the adjoining tool flank.

8. A cutting insert according to one of the preceding claims **characterized in that** a plurality of mutually separated recesses are provided on a tool flank.

9. A cutting insert according to one of claims 1 to 8 **characterized in that** the cutting insert as an indexable cutting insert has at least three, preferably at least four substantially flat edge surfaces which are angled relative to each other and of which at least two have the recess or recesses (6).

10. A cutting insert according to one of the preceding claims **characterized in that** the one or more recesses extend over the entire length of a tool flank, as measured parallel to a cutting edge.

## Revendications

1. Plaquette de coupe avec une surface supérieure et une surface inférieure (1, 2) ainsi qu'avec une ou plusieurs surfaces latérales (3) qui relient les surfaces supérieure (1) et inférieure (2) l'une à l'autre, une arête de coupe (4) étant formée à la transition entre au moins une surface latérale (3) et au moins la surface supérieure (1), la surface supérieure adjacente à l'arête de coupe étant configurée comme surface de coupe et la surface latérale adjacente à l'arête de coupe étant configurée comme surface de dépouille (3), à une distance de l'arête de coupe (4), au moins un évidement (6) étant prévu, **caractérisée en ce que** les surfaces de dépouille sont essentiellement planes, exception faite dudit au moins un évidement, **en ce que** ledit au moins un évidement est configuré comme une rainure (6) s'étendant parallèlement à l'arête de coupe (4) et terminant avant une transition de coin vers une surface de dépouille avoisinante, **en ce que** les parois latérales de l'évidement (6) forment un angle de plus que 60 ° avec le plan de la surface de dépouille et **en ce que** l'évidement présente une profondeur d'au moins 1 mm par rapport au plan de la surface de dépouille adjacente.

2. Plaquette de coupe selon la revendication 1, **caractérisée en ce que** l'évidement (6) s'étend sur une longueur mesurée parallèlement à l'arête de coupe (4), qui correspond à au moins 60 % et de préférence à au moins 80 % de la longueur de l'arête de coupe associée.

3. Plaquette de coupe selon l'une des revendications 1 ou 2, **caractérisée en ce que** l'évidement est à une distance de l'arête de coupe (4) qui correspond à au moins un dixième de la distance minimale entre la surface supérieure et la surface inférieure de la plaquette de coupe.

4. Plaquette de coupe selon l'une des revendications 1 à 3, **caractérisée en ce que** l'évidement est à une distance minimale de l'arête de coupe (4) qui correspond au maximum à un quart de la distance maximale entre la surface supérieure et la surface inférieure (1, 2).

5. Plaquette de coupe selon l'une des revendications 1 à 4, **caractérisée en ce qu'**elle est configurée comme une plaquette réversible à deux faces, dans laquelle la surface supérieure (1) et la surface inférieure (2) sont configurées de manière identique et servent, en fonction de l'orientation, comme surface de coupe ou comme surface d'appui.

6. Plaquette de coupe selon la revendication 5, **caractérisée en ce que** l'évidement (6) présente une forme symétrique par rapport aux arêtes de coupe (4, 5) avoisinantes supérieure et inférieure.

7. Plaquette de coupe selon l'une des revendications précédentes, **caractérisée** en ce les évidements ont une profondeur d'au moins 1,5 mm par rapport au plan de la surface de dépouille adjacente.

8. Plaquette de coupe selon l'une des revendications précédentes, **caractérisée en ce que** plusieurs évidements espacés les uns des autres sont prévus sur la surface de dépouille.

9. Plaquette de coupe selon l'une des revendications 1 à 8, **caractérisée en ce que** la plaquette de coupe en tant que plaquette de coupe indexable comprend au moins trois, de préférence au moins quatre surfaces latérales essentiellement planes et formant entre elles un angle, dont au moins deux comprennent le(s) évidement(s) (6).

10. Plaquette de coupe selon l'une des revendications précédentes, **caractérisée en ce que** ledit (ou lesdits) évidement(s) s'étend(ent) sur la longueur complète d'une surface de dépouille, mesurée parallèlement à une arête de coupe.
